# EUROPEAN PATENT APPLICATION

(11) **EP 1 089 444 A1**
(43) Date of publication of application: **04.04.2001**
(21) Application number: 00308073.6
(22) Date of filing: 18.09.2000
(51) Int. Cl.: H04B 1/28

(54) **Method and apparatus for power based dynamic channel allocation for receiver dynamic range mitigation**

(30) Priority: 30.09.1999 US 409468
(71) Applicant: LUCENT TECHNOLOGIES INC., Murray Hill, New Jersey 07974-0636 (US)
(72) Inventor: Kaminski, Walter Joseph, Long Valley, New Jersey 07853 (US); Kolsrud, Arild, Bridgewater, New Jersey 08807 (US); Solondz, Max Aaron, Morris Township, New Jersey 07960 (US)
(74) Representative: Buckley, Christopher Simon Thirsk

(57) **Abstract**

Apparatus for properly receiving communication signals having relatively high dynamic ranges and which are transmitted by equipment of a communication system includes a receiver comprising a plurality of filters (606,608,610) each of which represents a frequency band assigned a specific dynamic range. A controller (624) coupled to the receiver determines the amplitude of the received signals. The controller is also coupled to a call processing module (628). The controller also determines whether the received signal is in the proper frequency band; that is whether the amplitude of the received signal is within the assigned dynamic range of the frequency band within which the signal is transmitted. When the signal is not in the proper frequency band, the controller in conjunction with the call processing module transmits a message to the equipment that transmitted the received signal instructing the equipment as to which frequency band to transmit the signal.

## Description

### Background of the Invention

### Field of the Invention

The present invention is generally related to a method and apparatus for receiving signals of relatively high dynamic range and in particular a method and apparatus of allocating received signals to certain channels based on the strength of the received signals.

### Description of the Related Art

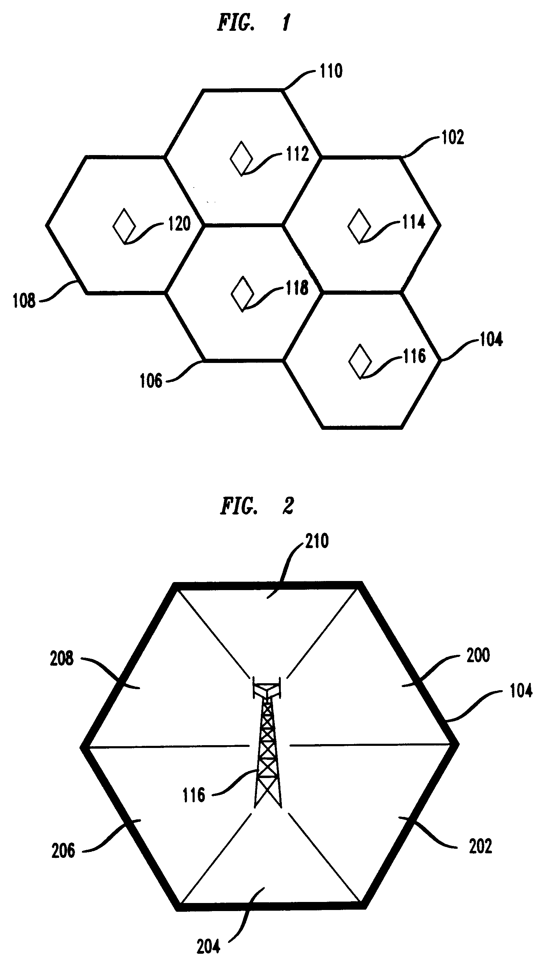

Communication systems, and in particular, wireless communication systems comprise a plurality of communication channels through which subscribers communicate with each other and with the system. A portion of a typical wireless communication system is shown in FIG. 1. The wireless communication system of FIG. 1 depicts a cellular system comprising cells (e.g., 102, 104, 106, 108, 110) whereby each cell is a symbolic representation of the geographical region covered by communication network equipment commonly known as cell sites or base stations (e.g., 112, 114, 116, 118). Each base station has system equipment comprising radio equipment that are used to transmit and/or receive communication signals between a base station and a user equipment. The system equipment is employed by the service provider to enable communication within the area covered by the individual cells, and can also include other equipment located at places other than base stations. The service providers (also called operators) are entities that own, control and operate the system equipment. The term "user" hereinafter is used interchangeably with the term "subscriber" to indicate an entity (i.e., person, facility or a combination thereof) who is allowed access (when possible) to the communication system. User equipment is used by a subscriber to obtain access to the communication system. Access to the communication system is the ability of a subscriber to make use of the resources (e.g., system equipment, communication channels) of the communication system. The user equipment is typically a cellular phone or any other communication equipment that is used by a subscriber of a communication system. For example, the user equipment can be a wireless portable computer or any other device that can be instructed by the system equipment to transmit and/or receive information in different channels of the communications system. The system equipment further comprises processing equipment for retrieving information being carried by the communication signals and for implementing procedures based on communication protocols. A communication protocol is a set of procedures or processes that dictate how communications between users of the communication system is to be initiated, maintained and terminated. The communication protocol also dictates the communications between user equipment and system equipment. Communication protocols are part of well known and established standards that are followed by user and system equipment owned and operated by operators of communication systems.

Referring to FIG. 2, there is shown cell 104 divided into six separate areas called sectors. Cell 104 has six sectors (200, 202, 204, 206, 208, 210) each of which has designated radio equipment that transmit and/or receive communication signals between base station 116 and subscribers located in those sectors. The radio equipment of each cell's base station, or of each sector as shown in Fig 2., operate on a different set of channels as per the standard being followed by the communication system and the channel plan established by the service provider. For example, communication standards for cellular wireless communication system often deploy channel pairs consisting of an uplink channel upon which the user equipment transmits to the base station, and a downlink channel upon which the base station transmits to the user equipment. A channel plan dictates which specific subset of communication channels may be used within each cell or each sector, out of the total set of channels with which the system operates. For example a subscriber located in sector 200 transmits and receives communication signals from the radio equipment (typically at base station 116) assigned to sector 200 of cell 104. The communication signals carry information being conveyed between a user equipment and the system equipment.

For many cellular communication systems, when a subscriber migrates from one cell to another, or from one sector of a cell to another sector of the same cell, a procedure called handoff is performed. The handoff enables the radio equipment of the cell or sector (i.e., the new cell or sector) to which the subscriber has migrated to transmit, receive and otherwise process communication signals to and from the subscriber. The radio equipment of the cell or sector from which the migrating subscriber is leaving (i.e., the old cell or sector) hands off the processing of the subscriber's signals to the radio equipment of the new cell or sector. In many cases, the channel set used by the radio equipment of the new cell or sector is different than the channel set of the radio equipment of the old cell or sector. Thus, the user equipment (e.g., cell phone) is typically designed to be able to convey (i.e., transmit and receive) communication signals on one of a plurality of channels or channel pairs. The user equipment is designed to transmit signals on any one of the uplink channels and to receive signals on any one of the downlink channels. The channel selection decision for the user equipment is performed by the system equipment. The various radio equipment at base station 116 are designed to process any user equipment signals within the entire set of operating channels, but typically, only those channels deployed by the service provider's channel plan are monitored or used by the system equipment of a particular base station. The radio equipment comprises transmitters, receivers and other processing equipment that perform such tasks as billing and allocating resources to subscribers requesting access to the communication system.

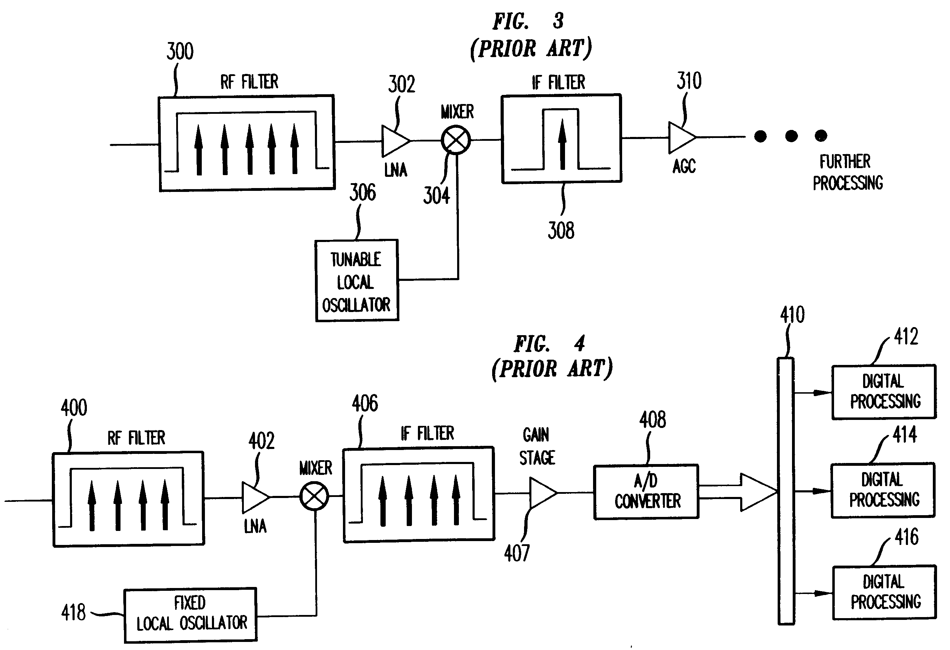

Referring to FIG. 3, there is shown a typical narrow band (individual carrier) radio receiver architecture used within a base station. The term "narrow band" refers to the bandwidth of the IF (intermediate frequency) filter used by the radio. The narrow band IF filter intentionally limits each particular base station radio's reception to a single uplink channel. This channel is also known as a carrier or carrer frequency, which refers to the central frequency of the individual uplink channel bandwidth. In the case of base station receivers, this one uplink channel is associated with one individual user equipment, and thus multiple individual carrier radios must be employed by the base station in order to communicate simultaneously with more than one user equipment on more than one communication channel. Therefore each base station radio can only process one "individual carrier" frequency. The narrow band receiver shown in FIG. 3 uses well known techniques of receiving communication signals, and is often deployed in different types of wireless communication systems such as the American Mobile Phone System (AMPS) and the Time Division Multiple Access (TDMA) system.

A signal is received by an antenna (not shown) and transferred to the Radio Frequency (RF) filter 300 which allows only signals falling within a certain frequency band (i.e., range of frequencies) to be processed. The output of filter 300 is coupled to Low Noise Amplifier (302) and the output of LNA 302 is downconverted to the Intermediate Frequency (IF) with mixer 304 and tunable local oscillator 306. Mixer 304 and local oscillator 306 serve to translate the frequency content to a specific IF. The tunable local oscillator is used to tune in any one specific uplink carrier and make its information content (signal bandwidth) fall within the narrow band IF filter. The output of mixer 304 is applied to IF filter 308 which is designed to be narrow enough to pass only one single channel.

The RF signals from other user equipment on other carrier frequencies will not fall within the narrow bandwidth of IF filter 308. The output of IF filter 308 is applied to an Automatic Gain Control (AGC) circuit and is then further processed by processing equipment (not shown). The AGC circuit is able to compensate (attenuate or amplify) a received signal so as to keep such a signal at a relatively constant strength (i.e., constant amplitude and/or power). The operation of the AGC circuit is kept simple by the fact that it need only operate on a single carrier at a time. The AGC circuit compensates for the signal strength variations by amplifying or attenuating a received signal thus keeping the strength of the received signal relatively constant. The compensation performed by the AGC circuit to maintain the signal strength relatively constant does not affect other simultaneous carriers as such carriers are filtered out by the narrow IF filter 308. The ensuing processing stages, therefore, need not cope with a large variations in signal strength as the AGC circuit has already levelled out changes in signal magnitude due to distance and slow fading (i.e., attenuation effects from the environment). Also, because of IF filter 308, the ensuing stages do not receive multiple signals from multiple user equipment simultaneously.

One major disadvantage of such narrow band, or individual carrier architectures is that when the capacity of the system is to be increased by allowing the use of more channels simultaneously, more radios must be added to each base station. To increase the number of subscribers that can be served by a communication system without having to add more narrow band individual carrier radios , service providers prefer to use newer base station architectures that employ wide band, multiple carrier radio receivers.

FIG. 4 illustrates the architecture of the typical wide band multiple carrier base station radio receiver architecture. RF filter 400 receives communication signals falling within its band of operation or bandwidth. The bandwidth of RF filter 400 is designed to cover the entire uplink channel set over which the communication system may operate, but excludes interference from other systems operating outside its bandwidth. Any signal that falls outside the bandwidth will not pass through filter 400 to LNA 402. Unlike the narrow band, individual carrier radio architecture, the IF filter of the wide band, multiple carrier radio is able to receive more than one signal simultaneously. Depending on the bandwidth of IF filter 406, a single radio can simultaneously receive many or all of the separate carriers contained within the RF bandwidth of RF filter 400. The bandwidth of IF filter 406 may be the same bandwidth as that of RF filter 400. The output of LNA 402 is applied to mixer 404 which simultaneously frequency translates all of the RF signals to IF signals. The signals pass through IF filter 406, through gain stage 407, and on to an analog-to-digital (A/D) converter 408. The digital information conveyed in bus 410 contains information from all the simultaneous carriers. Searate digital processing elements 412, 414, and 416 perform the digital filtering required to isolate individual carriers before final decoding. The A/D converter is a well known circuit that converts analog signals to digital signals. Therefore, IF filter 406, gain stage 407, and the A/D converter 408, all process multiple carriers simultaneously.

A serious problem occurs with wide band, multiple carrier radio architectures because of the relatively high dynamic range of the signals. The dynamic range refers to the largest difference in strength (i.e., power or amplitude) among the received carriers. Thus, the difference between the weakest carrier and the strongest carrier present within a multiple carrier radio represents the dynamic range of that signal. In many cases, various carriers within a wide band, multiple carrier radio architecture have strengths that differ by relatively large amounts. These architectures are said to have relatively high dynamic ranges.

Some carriers may be received with relatively high signal strengths, while other simultaneously received carriers are barely detected because of their relatively low signal strength. When the dynamic range of a radio receiver is less than the dynamic range of the multiple carriers, some carrier signals are not properly received, causing errors to occur in the information being carried by these signals.

The dynamic range of a receiver is defined as the range of amplitude (or power) of signals that can be received because they are both above a minimum detectable signal (MDS) level, and below an overload or compression level of the receiver. The MDS is defined as the strength level below which a signal is not properly received; that is the signal is not even detected or if detected its relatively weak strength causes errors to occur in the information being carried. Signals whose strength is above the compression level are distorted because they overload the receiver causing errors to occur in the information being carried by such signals.

The strength of an individual received carrier depends on several effects, including, the distance between the base station and the user equipment, shadow fading, and fast fading. Distance causes slowly varying changes in received power level. Shadow fading is the rapid fluctuations in a signal's strength due to obstructions in the path between the user equipment and the base station. Fast fading, also known as Rayleigh fading, is caused by constructive and destructive addition of multiple rays. The rays are different parts of the signal. These rays take different paths (also called multipath) because of reflections against objects in their environment. All of these effects combine to cause rapid and severe fluctuations in the strength (i.e., power level or amplitude level) of each carrier associated with each individual user equipment over time. Signals of users located relatively close to the base station will have a higher signal strength (less degradation) than signals of users located relatively far from the base station. The proper reception of simultaneous multiple carriers having a certain dynamic range occurs when all of the separate carriers are within the dynamic range of the multiple carrier radio receiver. The multiple carriers can only be properly received when they all are above the MDS level and below the compression level.

Lack of sufficient dynamic range manifests itself in three ways: undetectable signals, overload distortion, and small signal suppression. Referring to FIG. 4, if the gain of gain stage 407 is too small, the weakest signals remain undetectable by subsequent stages because their signal strengths remain below the MDS level of the subsequent stages, even though the strongest signals can be reliably detected and decoded. If the gain of gain stage 407 is too large, the strongest signals will be distorted by the compression and non-linear effects of stage 407 and subsequent stages, and decoding errors for these strong signals will occur. Even if the gain of gain stage 407 is set properly to nominally allow adequate detection of the weakest signals without overload compression of the strongest signals, a non-linear effect called small signal suppression may occur.

The small signal suppression effect occurs when the relatively weak signals do not experience the full gain while in the presence of the very strong signals, and therefore, these weak signals may fall below the MDS level of subsequent stages. Referring to FIG 3, the small signal suppression effect can also occur in the RF front end of a radio architecture, in LNA 302 and/or in mixer 304, where it is known as in-band blocking. In band blocking refers to a phenomenon whereby the difference in strength between a weak carrier and a strong carrier is substantial (greater than 80 dB) making it very difficult for a receiver to properly decode the weak signal while in the presence of the strong signal. For the narrow band, individual carrier radio architecture of Fig. 3, this in-band blocking is usually the fundamental limitation of the dynamic range of the receiver.

The dynamic range of a wide band, multiple carrier radio receiver is typically limited by the dynamic range of its A/D converter (e.g., converter 408) in Fig 4. Typically, an A/D converter has a dynamic range on the order of 60-80 dB. The dynamic range of an A/D converter is the difference (in strength) between the weakest and the strongest signal that can be properly processed by the A/D converter. AGC amplifiers which are able to compensate for the dynamic range of a single instantaneous carrier (attenuating or amplifying the single received signal as needed) cannot be used in wide band, multiple carrier radio receivers. This is because one value of gain cannot simultaneously be appropriate for all of the different carriers.

One approach at limiting the dynamic range experienced by the base station receiver is to dynamically control the signal strength (i.e., power or amplitude) radiated at the user equipment thus limiting the dynamic range of the signals received by the base station receiver. User equipment located relatively near the base station are instructed to lower their transmitted power level to avoid overload, and user equipment located relatively far from the base station are instructed to radiate larger power levels, in order to compensate for distance and shadow fading effects. To dynamically control the radiated strength of a signal at the user equipment requires that the base station monitor the received signal strength and then decide whether to raise, lower, or maintain the current user equipment signal level. A special power control channel is used to allow the base station to inform the user equipment of its latest power control instruction. The speed and accuracy of this arrangement and the additional circuitry and complexity required on the part of the base station and the user equipment makes this quite complex, and impossible to implement with pre-existing user equipment that do not have these features.

What is therefore needed is a relatively simple and inexpensive method and apparatus that is able to properly receive multiple carrier signals having a relatively high dynamic range.

### Summary of the Invention

The present invention provides an apparatus and method for properly receiving signals having a relatively high dynamic range. The signals are received from user equipment and/or system equipment of a communication system. The apparatus comprises a channelizer having a plurality of frequency bands where each such frequency band is assigned a dynamic range. The apparatus further comprises a controller coupled to the channelizer and a call processing module coupled to the controller. When a signal is received by the channelizer, the controller determines the amplitude (or power) of the received signal. The controller determines whether the received signal is in the proper frequency band. If the signal strength falls outside the dynamic range assigned to the frequency band within which it is transmitted, the controller, in conjunction with the call processing module, sends a message to the user equipment that transmitted the signal. The message instructs said user equipment to transmit the signal in a proper frequency band such that the signal strength is within the assigned dynamic of this proper frequency band. In this manner, signals having relatively high dynamic ranges can be properly received by the apparatus.

The method of the present invention provides monitoring the frequency bands, determining the amplitude of signals received in each frequency bands. The method of the present invention also provides determining, based on the amplitude of the received signal, whether such signal is in the proper frequency band; and transmitting a message to the user equipment that transmitted the signal to transmit the signal in its appropriate frequency band.

### Brief Description of the Drawings

FIG. 1 depicts a portion of a typical wireless cellular communication system;
FIG. 2 depicts one of the cells shown in FIG. 1 where said cell is divided into six sectors;
FIG. 3 is a prior art block diagram of a narrow band, individual carrier radio receiver architecture;
FIG. 4 is a prior art block diagram of a wide band, multiple carrier radio receiver architecture;
FIG. 5 depicts the apparatus of the present invention coupled to a base station tower and antenna in communication with a user of the communication system;
FIG. 6 represents a more detailed block diagram of the apparatus of the present invention;
FIGS. 6A & 6B depicts a conceptual view of the signals within the apparatus of the present invention;
FIG. 7 depicts the method of the present invention;
FIG. 8 depicts a sector of the cell in FIG. 2 divided into three portions;
FIG. 9 depicts a particular allocation of the frequency band of the communication system and how they are used to perform a handoff for a particular subscriber of the communication system.

### Detailed Description

The apparatus of the present invention comprises radio equipment configured to receive signals (e.g., multiple carrier signals) and cause such signals to be transmitted in certain frequency bands based on the strength (e.g., amplitude or power) of the received communication signals as perceived by the base station receiver. The apparatus of the present invention assigns certain dynamic ranges to the frequency bands. When a signal is received, the amplitude of the signal is determined; that is the amplitudes of all the individual carriers constituting the signal are determined. The apparatus of the present invention causes the multiple carriers to be translated in frequency so that all the different carriers are received in proper frequency bands. The proper frequency bands are the bands whose assigned dynamic ranges encompass the amplitude of the signals located therein. In this manner, signals (e.g., multiple carrier) having relatively high dynamic ranges can be properly received without the addition of complex circuitry.

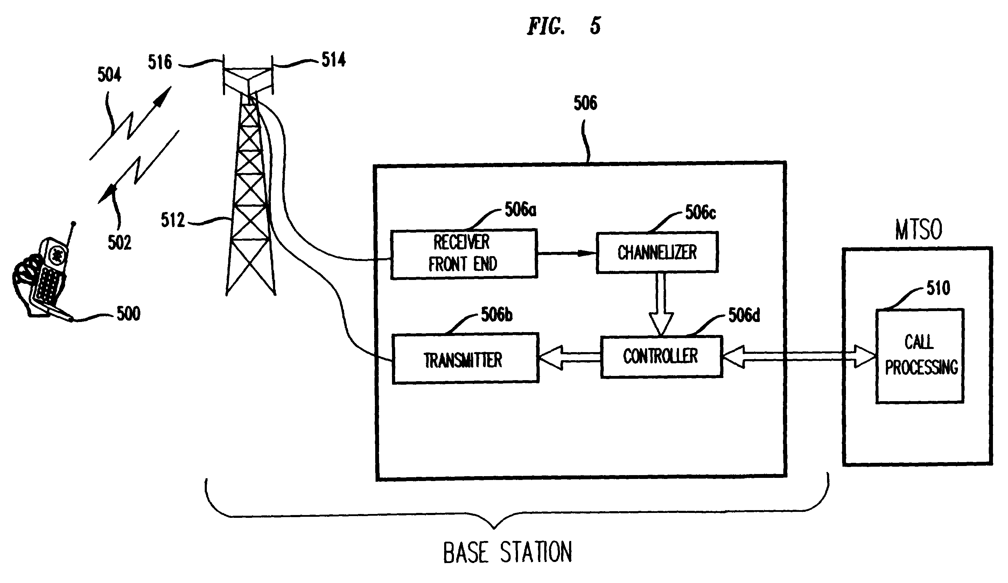

Referring now to FIG. 5, there is shown the apparatus of the present invention communicating with user equipment 500 (e.g., a cell phone) over wireless communication links 502 (downlink, from base station to user equipment) and 504 (uplink, from user equipment to base station). The apparatus of the present invention comprises receiver front end 506a coupled to channelizer 506c. Channelizer 506c is coupled to controller 506d which is coupled to call processing unit 510. Transmitter 506b, receiving antenna 514, transmitting antenna 516 and tower 512 are shown for ease of explanation, but they are not part of the apparatus of the present invention. A signal from user equipment 500 is received by antenna 514 via wireless communication link 504. The signal is received by receiver front end 506a which RF filters, amplifies, and downconverts the received signal. The received signal typically comprises signals from different users, i.e., signal from user equipment 500 as well as other users of the system. The signal is then applied to channelizer 506c which further IF filters, amplifies, A/D converts, and then digitally processes the signal. Channelizer 506c comprises a plurality of frequency banding filters (implemented with analog IF filters) each of which is assigned a certain dynamic range. Channelizer 506c further comprises digital filters, digital detectors, and digital decoders used to receive each individual signal and determine, in any well known manner, the strength (e.g., amplitude or power) of the signals received in each of the frequency bands. Controller 506d transmits the amplitude information to call processing module 510 via communication link 508. As shown, the call processing module is typically located at a Mobile Telephone Switching Office (MTSO) that is usually remotely located from the base station. Call Processing module 510 transmits a message (via antenna 516 and communication link 502) to user equipment 500 in accordance with the protocol being followed by the communication system. The message instructs user equipment 500 to retune to the appropriate channel pair; to transmit and/or receive information over a different channel pair.

User equipment 500 is able to transmit and receive communication signals on any channel pair within the entire RF frequency band. Call Processing module 510 selects the specific channel pair so that it is within the proper frequency band based on the amplitude (or power) of the received signal. Call Processing module 510 causes user equipment 500 to transmit communication signals in the proper RF frequency band such that the strength (amplitude or power) of the signal is within the dynamic range of the selected frequency band. Controller 506d continually (or continuously, or periodically or aperiodically) monitors the individual channels of the frequency bands of channelizer 506c. If the strength of a signal from user equipment 500 changes such that it is not within the assigned dynamic range of the selected band, controller 506d in conjunction with call processing module 510 instruct user equipment 500 to retune to a different channel pair. This channel pair is chosen such that the uplink channel will be in the appropriate RF frequency band whose dynamic range encompasses the amplitude (or power) of the signal.

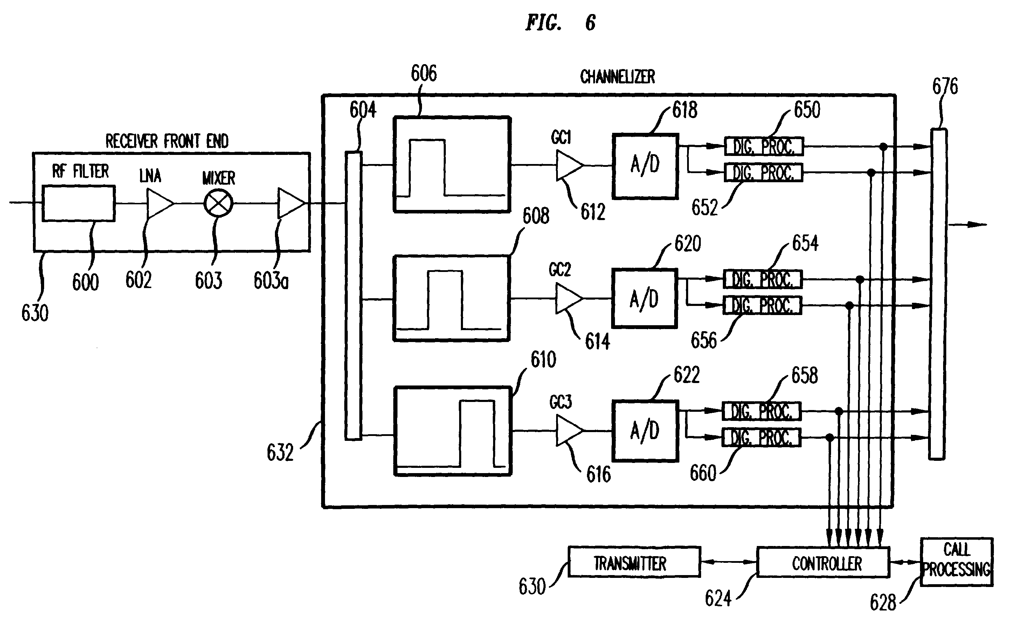

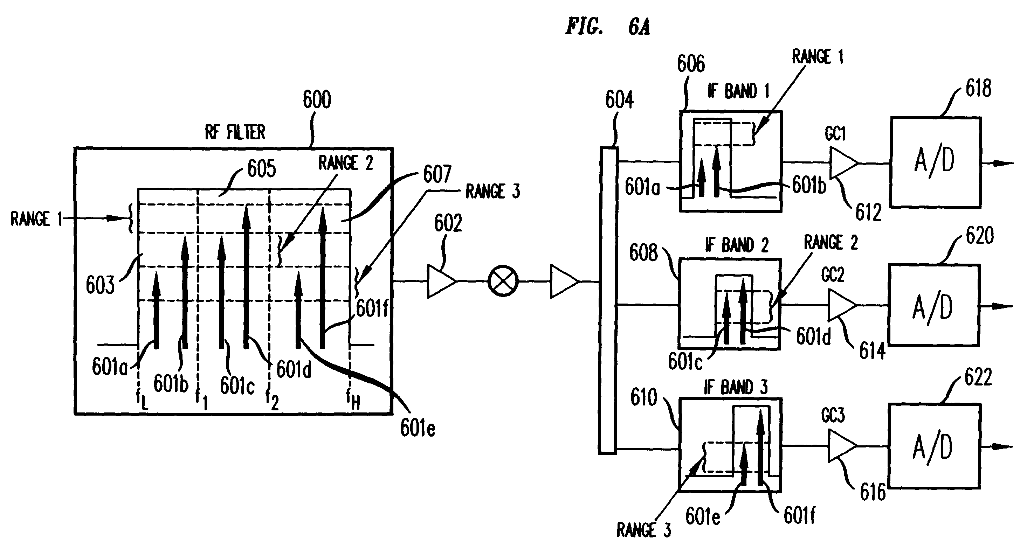

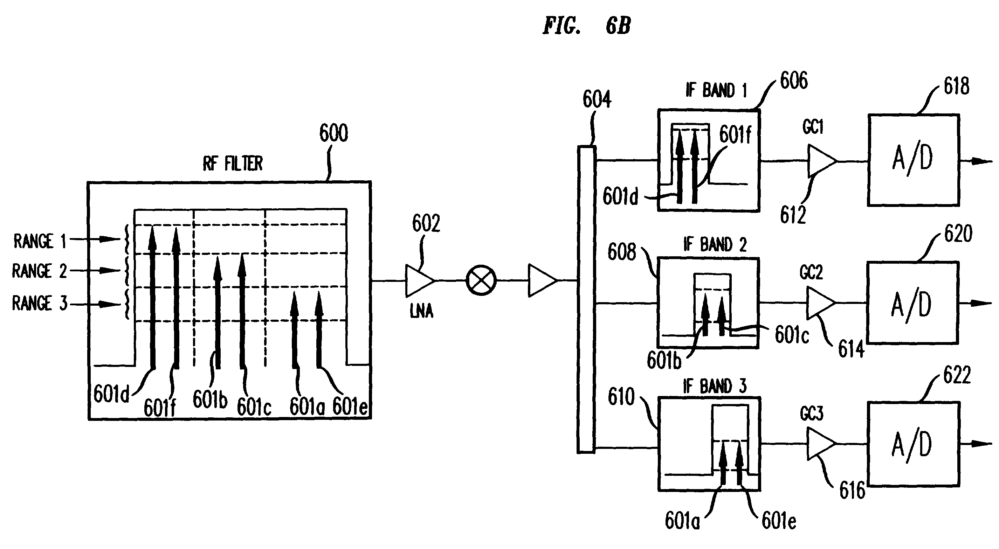

Referring now to FIG. 6, there is shown a more detailed diagram of the apparatus of the present invention. The radio architecture is broken up into two parts: the radio front end 630 and the channelizer circuit 632. Signals comprising multiple carriers are received by RF filter 600. The signals are applied to Low Noise amplifier (LNA) 602 and then they are applied to mixer 603, which downconverts the entire RF band into a wide band IF signals. The wide band IF signals are applied to IF amplifier 603a, and then on to signal splitter 604 of the Channelizer 632.

Signal splitter 604 applies the signals to each one of three IF filters ( 606, 608 and 610). The apparatus of the present invention is not limited to only three IF filters representing three frequency bands; the three IF filters are used for ease of explanation and illustrative purposes only. Each of the three IF filters is part of a band processing chain. Each band processing chain comprises an IF band filter (filter 606, 608, or 610), an IF amplifier (amplifier 612, 614, or 616), an analog-to-digital converter (A/D 618, 620, or 622) and a parallel set of digital processing elements (digital processors 650-660). Several functions are performed within these digital processors, including: digital filtering to isolate a single modulated carrier, digital demodulation to determine the individual carrier's signal strength and decoding to derive the information bits that represent the user voice signal or the user data. This individual user data is then transferred to bus 676 for further processing or for transmission to a user.

The apparatus of the present invention also comprises controller 624, which makes decisions about intracell handoff, and serves as an interface between the Call Processor 628 and the base station transmitter 630. An intracell handoff is a handoff that occurs within a cell, i.e., between radios of the same cell. Transmitter 630 is used to convey instructions (in the form of a message) to the user equipment to retune in order to perform the intracell handoff. The intracell handoff is the procedure by which user equipment is able to transmit and receive information over a different channel pair having the proper assigned dynamic range as directed by the present invention. The message is conveyed on a downlink channel.

During operation, the state of the carriers of a signal are shown in FIGS. 6A and 6B. For the sake of simplicity, the signal is shown as comprising six carriers (601a-601f) representing communication signals from a plurality of subscribers. RF filter 600 has a bandwidth of *f*_{*H*} - *f*_{*L*} within which three frequency bands are defined. The three frequency bands are lower band 603 with bandwidth *f*₁ - *f*_{*L*}, middle band 605 with bandwidth *f*₂ - *f*_{*1*} and upper band 607 with bandwidth *f*_{*H*} *- f*₂. It should be noted that the three defined frequency bands are defined as such for illustrative purposes only. The apparatus of the present invention can define any number of frequency bands and is not limited to three frequency bands. For the multicarrier signal shown as having been received by filter 600, carriers 601a and 601b are lower band signals, carriers 601c and 601d are middle band signals and carriers 601e and 601f are upper band signals. In FIG. 6A, the signals may have carriers of different strengths. FIG. 6a illustrates the signals received by the apparatus of the present invention before intracell handoffs are performed.

Each of the frequency bands is assigned a dynamic range, as shown in FIG. 6A. For example, lower band 603 has an assigned dynamic range of range 1 (the upper range of signal strengths), middle band 605 has an assigned dynamic range of range 2 (the middle range of signal strengths), and upper band 607 has an assigned dynamic range of range 3 (the lower range of signal strengths). Each of the assigned dynamic ranges represents a range of signal amplitudes (or power) that is allowed to pass through each of the bands as per the apparatus and method of the present invention. Carriers 601d and 601f have amplitudes that fall within range 1; carriers 601c and 601b have amplitudes that fall within range 2; carriers 601a and 601e have amplitudes that fall within range 3. The carriers constituting the received signals are amplified by LNA 602, downconverted by mixer 603, amplified by gain stage 603a, and then routed via analog splitter 604 to IF filters 606, 608 and 610. Splitter 604 is simply a distribution point that feeds the multicarrier signal to the three IF filters.

Each of the IF filters represents one of the defined frequency bands. The various carriers that constitute the received signal are filtered by the IF filters accordingly. Thus IF filter 606 allows only signals whose frequency content is within the lower band to pass through its circuitry and applies those signals to Gain Control circuit 1 (GC 612) whose output is applied to A/D converter 618. Signals with middle band frequencies (i.e., middle band signals) are filtered by IF filter 608 which applies said filtered signals to GC2 (614) whose output is applied to A/D converter 620. Upper band signals (i.e., signals having upper band frequencies) are filtered by IF filter 610 which applies said filtered signals to GC3 (616) whose output is applied to A/D converter 622. GC1-GC3 apply the proper amount of gain to their respective signals such that the amplitude of the signals are within the dynamic ranges of the A/D converters. The dynamic ranges of the A/D converters are set accordingly to match the dynamic range of the IF filters to which they are coupled.

The outputs of the A/D converters (618, 620, 622) are fed to digital processors 650, 652, 654, 656, 658 and 660 respectively, which determine, in any well known manner, the amplitudes of the signals filtered by the IF filters. The amplitude of each signal is conveyed to controller 624. The assigned dynamic range of each of the defined frequency bands are stored in controller 624. Controller 624 decides if the signals (or individual carriers of each of the signals) are in their proper bands, and if not, generates a message to retune the appropriate user equipment. The retune message causes an intracellular handoff to be performed in accordance with the protocol being used by the communication system.

The message instructs the users transmitting the various received carriers (i.e., carriers 601a-601f) to transmit their respective carriers on different channels in the proper frequency bands. For example, controller 624 decides carrier 601a is a weak signal to be processed within range 1, and therefore that this user equipment should not be transmitting in lower band 603. The user equipment that is transmitting carrier 601a is instructed to retune to a different channel pair, such that its transmitted carrier will fall into the proper band, i.e., upper band 607. As a result carrier 601a can be properly processed since its amplitude is within the assigned dynamic range of the upper band. Thus, carrier 601a is handed off from the lower band to the upper band. The other carriers (601b-601f) are handed off, using intracellular hand off, to their respective proper frequency bands. Therefore, referring to FIG. 6B, the multiple signals from the different user equipment are retuned and transmitted in accordance with the instructions from controller 624.

Each of the carriers from each of the user equipment is now transmitted in a proper frequency band. In this manner, the multiple carriers are received through a frequency band whose dynamic range allows the communication signals to be processed. Specifically, for the example depicted in FIG. 6A, carrier 601b has an amplitude that falls within range 2, and thus should be translated to middle band filter 608. Carrier 601c has an amplitude that is within range 2 and thus remains in the middle band (i.e., filter 608). Carrier 601d has an amplitude that is within range 1 and thus is translated to lower band filter 606. Carrier 601e has an amplitude that is within range 3 and thus remains in the upper band (i.e., filter 610). Carrier 601f has an amplitude that is within range 1 and is thus translated to lower band filter 606.

FIG. 6B depicts the multiple carriers, where each of the carriers has been retuned to its proper frequency band. The proper frequency band is lower band 603 for signals within range 1, middle band 605 for signals within range 2 and upper band 607 for signals within range 3. Generally, the proper frequency band for signals within a certain range is the band of frequencies with an assigned dynamic range that encompasses the strength (i.e., power and/or amplitude) of the signals; that is, the strength of the individual signals are within the assigned dynamic range of the frequency band. The carriers are tuned to their proper frequency bands as a result of a message from call processing module 628 instructing the user equipment as to which new channel it should transmit its signals.

When the user equipment receives the instruction from call processing module 628, it performs a handoff. Each of the IF bands is interpreted as a separate radio. For example, referring to FIGS 6A and 6B, carrier 601a is handed off from radio 606 to radio 610. Thus, signals from user equipment are handed off between the plurality of radios (or IF bands) located at the base station based on the strength (amplitude or power) of the signals. The signals processed by a first radio is handed off to a second radio when the amplitude of the signal changes such that it is within the assigned dynamic range of the second radio. The method and apparatus of the present invention thus causes the signal to be retuned in frequency so that it is received in the proper frequency band.

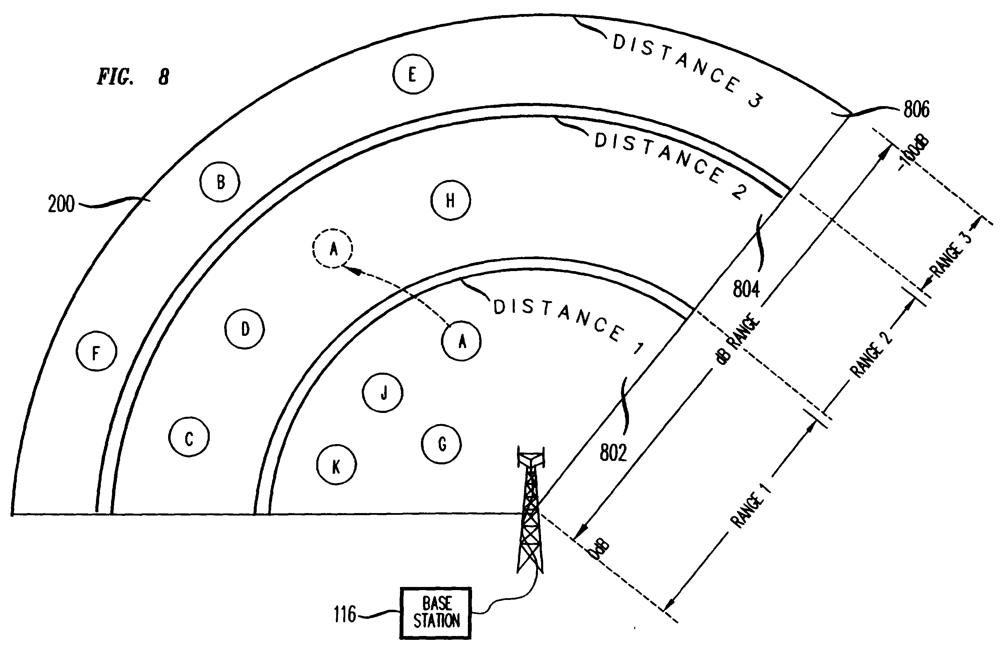

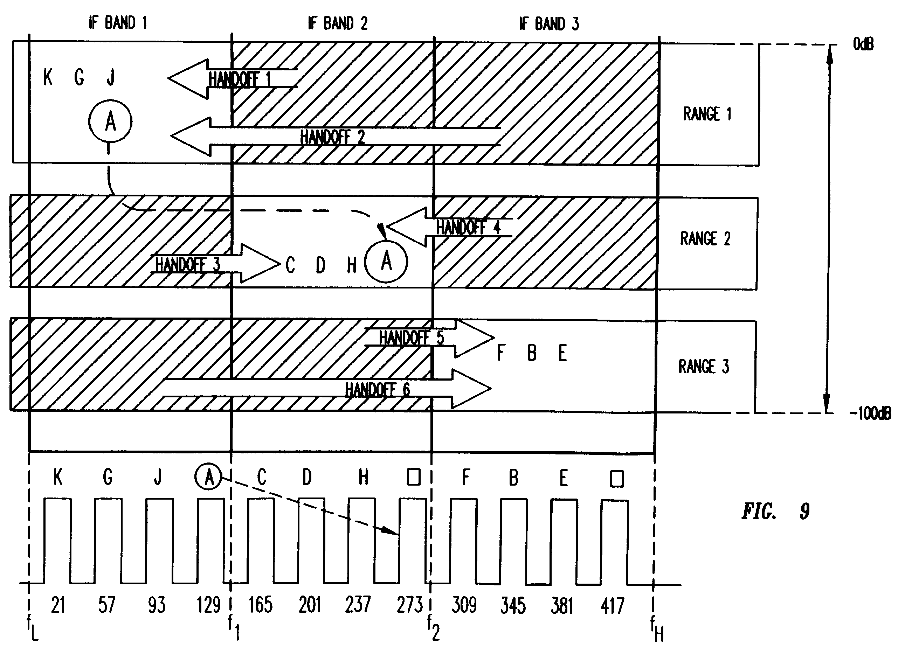

Referring now to FIG. 8, there is shown sector 200 within which base station 116 is located. Sector 200 is apportioned into three different portions. The portions are defined by distances from the base station. Portion 802 is the area within distance 1. Portion 804 is the area between distance 1 and distance 2. Portion 806 is the area between distance 2 and distance 3. Various subscribers (e.g., A, B, C, ... F) are located throughout the sector. The relative amplitude or relative power (usually expressed in terms of decibels or dB) of a signal received from a certain subscriber within the sector is proportional to the distance span within which the subscriber is located; that is, the distances shown in FIG. 8 are directly related to the amplitude ranges shown in FIGS. 6A and 6B. For example, the amplitude (or power) of a signal received at base station 116 from subscriber B is lower than the amplitude (or power) of a signal received from subscriber G. As can be clearly seen in FIG. 8, subscriber G is closer to base station 116 than subscriber B. The amplitude of a signal from a subscriber located in portion 802 can differ with an amplitude of a signal from subscriber located in portion 806 by as much as 100 dB. Hereinafter, the term "range" is used to describe both the distances shown in FIG. 8 and the signal amplitude (power) dynamic ranges shown in FIGS. 6A, 6B and 9.

When a subscriber migrates from one range to another range within the same sector, a hard handoff is performed by the apparatus and method of the present invention. For example, referring again to FIG. 8, when subscriber A migrates from portion 802 to portion 804 of sector 200, a hard handoff is performed between IF Band 1 and IF band 2 - (see FIGS. 6, 6A and 8).

FIG. 9 shows the frequency bands within which the subscribers in sector 200 of FIG. 8 are operating. As subscriber A moves from range 1 to range 2, the amplitude (or power) of the signals received from subscriber A at base station 116 decreases from within range 1 to within range 2. Thus, the amplitude of the signals from subscriber A is now within range 2. In accordance with the method and apparatus of the present invention, a handoff is performed whereby subscriber A is instructed to transmit its signals in IF band 2. As shown in FIG. 9, the frequency bands are divided into channels in accordance with a reuse plan. Such reuse plans are well established in cellular systems as a way to distribute use of different channels among different base stations to reduce interference between users of neighboring base stations. IF band 1 includes channels 21, 57, 93, 129; IF band 2 includes channels 165, 201, 237 and 273; IF band 2 includes channels 309, 345, 381 and 417. No significance should be given to the channel numbers other than their location within the IF bands; the channel numbers are selected for illustrative purposes only. The channels may or may not be regularly spaced, and may be used in any order.

For IF band 1, subscriber K is transmitting in channel 21, subscriber G is transmitting in channel 57, subscriber J is transmitting in channel 93 and subscriber A is transmitting in channel 129. In IF band 2, subscriber C is transmitting in channel 165, and so on. Note that no subscriber is transmitting in available channel 273 of IF band 2 nor in available channel 417 of IF band 3; that is, available channels 273 and 417 are currently vacant. Continuing with the example above, when subscriber A migrates from range 1 to range 2 causing its amplitude to be within dynamic range 2 instead of dynamic range 1, a handoff is performed. In the particular channel scheme shown in FIG. 9, user equipment A is instructed in accordance with the apparatus and method of the present invention to no longer transmit its signal in channel 129 and, instead, to now transmit its signal in channel 273. FIG. 9 also depicts the different handoffs that can occur based on the amplitude of the received signals. For example, Handoff1 occurs when a carrier is tuned from IF Band 2 to IF Band 1; Handoff 6 occurs when a carrier is tuned from IF Band 1 to IF Band 3 and so on.

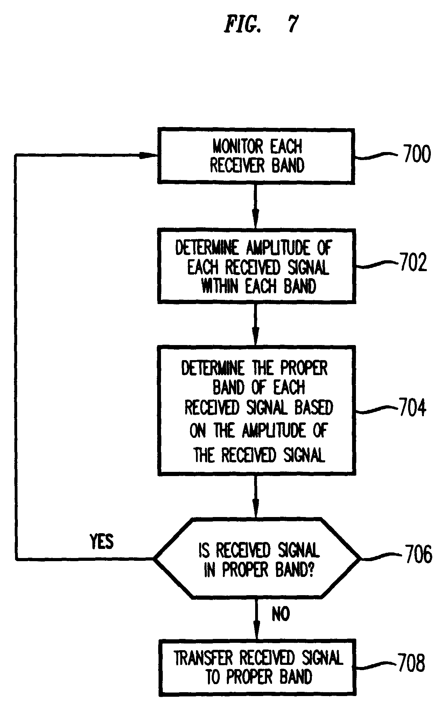

Referring now to FIG. 7, there is shown the method of the present invention. In particular, the method of the present invention is performed by base station equipment that instruct user equipment to transmit their signals in proper frequency bands. As a result, the base station equipment is able to process signals of relatively high dynamic range. In step 700, the base station equipment monitor the various receiver bands (i.e., channels). The receiver bands are monitored in any well known manner―i.e., continuous monitoring, continual monitoring, periodic monitoring or aperiodic monitoring. A controller (e.g., controller 624 of FIGS. 6 & 6A & 6B) in conjunction with a call processing module (e.g., module 628 of FIGS. 6 & 6A & 6B) perform the monitoring step.

In step 702, the base station equipment determine the amplitude of each received signal. In particular, for each signal received within a band, the output of a receiver band (IF filter) is converted to a digital signal, processed and is discerned by a controller. Not only does the base station equipment determine the amplitude (or power) of the received signal, but the equipment also determines the band within which the signal was received. In step 704, the controller determines the proper band for the received signal based on that signal's strength (i.e., amplitude or power). The controller has a plurality of ranges stored therein and each range is associated with a particular receiver band. Each band is assigned a particular amplitude (or power) range. In step 706, the received signal's amplitude is compared to the assigned dynamic range of the frequency band within which the signal is transmitted to determine whether the signal is in the proper frequency band. When the signal's amplitude is in a frequency band whose assigned dynamic range encompasses the signal's amplitude, then the signal is said to be in the proper band. The method of the present invention returns to step 700 to continue to monitor the receiver bands. Otherwise, the method of the present invention moves to step 708 where the user equipment is instructed to retune so as to transmit its signal in the proper band. In particular, base station equipment (e.g., the controller and call processing module) sends a intracellular handoff message to the specific user equipment that transmitted the signal that was not in the proper band. This handoff message instructs said user equipment to transmit on a channel within the proper band. The base station equipment determines the proper band based on the amplitude of the received signal as described above. The base station continues to monitor the receiver bands to cause the user signals to be transmitted in the proper frequency bands.

## Claims

1. An apparatus for receiving a signal having a certain strength, the apparatus
CHARACTERIZED BY:
a channelizer (506c) configured to receive the signal and having a plurality of frequency bands where each such frequency band is assigned a dynamic range;
a controller (506d) coupled to the channelizer where said controller is configured to determine the strength of a signal received by the channelizer and generate information from the determined strength; and
a call processing module (510) coupled to the controller where said call processing module receives the information from the controller and transmits a message based on the received information where the message causes the signal to be transmitted in a proper frequency band.

2. The apparatus of claim 1 further comprising a front end receiver (506a) coupled to the channelizer where said front end receiver is configured to receive the signal and transfer said signal to the channelizer.

3. The apparatus of claim 2 where the front end receiver has a plurality of frequency bands corresponding to the frequency bands of the channelizer.

4. The apparatus of claim 1 where the controller is further configured to determine the frequency band within which the received signal is located.

5. The apparatus of claim 4 wherein the generated information is based on the strength of the received signal and the frequency within which the signal is received.

6. The apparatus of claim 1 where the strength of the signal is based on the signal's amplitude and/or power.

7. The apparatus of claim 6 where the call processing module selects the proper frequency band such that the amplitude and/or power of the received signal is within the assigned dynamic range of the selected proper frequency band.

8. The apparatus of claim 1 where the dynamic range assigned to the frequency bands are stored in the controller.

9. A method for receiving a signal having a certain strength, the method
CHARACTERIZED BY THE STEPS OF:
monitoring a receiver frequency band of a communication system;
determining the strength of a signal received in the receiver frequency band;
generating a message based on the determined strength where said message causes the signal to be in a proper frequency band.

10. The method of claim 9 where monitoring a receiver frequency band comprises monitoring communication channels of a communication system

11. The method of claim 9 where determining the strength of a signal further comprises assigning a dynamic range to the receiver frequency band; and determining the frequency band within which the received signal is located.

12. The method of claim 9 where generating a message based on the determined strength comprises generating a message based on the determined strength and the frequency band within which the received signal is located.
